Europäisches Patentamt

European Patent Office

Office européen des brevets

(19)

(11) Numéro de publication : **0 039 980**
**B1**

(12) **FASCICULE DE BREVET EUROPÉEN**

(45) Date de publication du fascicule du brevet :
02.01.86

(51) Int. Cl.⁴ : **H 04 L 25/03**

(21) Numéro de dépôt : **81200500.7**

(22) Date de dépôt : **12.05.81**

(54) **Système adaptatif de réception de données numériques à compensation des distorsions d'amplitude et de phase introduites par le canal de transmission des données.**

(30) Priorité : **14.05.80 FR 8010863**

(43) Date de publication de la demande :
**18.11.81 Bulletin 81/46**

(45) Mention de la délivrance du brevet :
**02.01.86 Bulletin 86/01**

(84) Etats contractants désignés :
**DE FR GB SE**

(56) Documents cités :
**DE-A- 2 755 308**
**IBM TECHNICAL DISCLOSURE BULLETIN, vol. 17, no. 2, juillet 1974, New York, US, DESBLACHE et al.: "Algorithms for accelerating convergence of adaptive equalizers", pages 447-451**
**IEEE TRANSACTIONS ON COMMUNICATIONS, vol. COM-24, no. 8, août 1976, New York, US, CANTONI et al.: "Properties of the eigenvectors of persymmetric matrices with applications to communication theory", pages 804-809**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB SE**

(72) Inventeur : **Sari, Hikmet**
**Société Civile S.P.I.D. 209 rue de L'Université**
**F-75007 Paris (FR)**

(74) Mandataire : **Landousy, Christian et al**
**Société Civile S.P.I.D. 209, Rue de l'Université**
**F-75007 Paris (FR)**

Jouve, 18, rue St-Denis, 75001 Paris, France

## 0 039 980

**Description**

La présente invention concerne un système adaptatif de réception de données numériques à compensation des distorsions d'amplitude et de phase introduites par le canal de transmission des données.

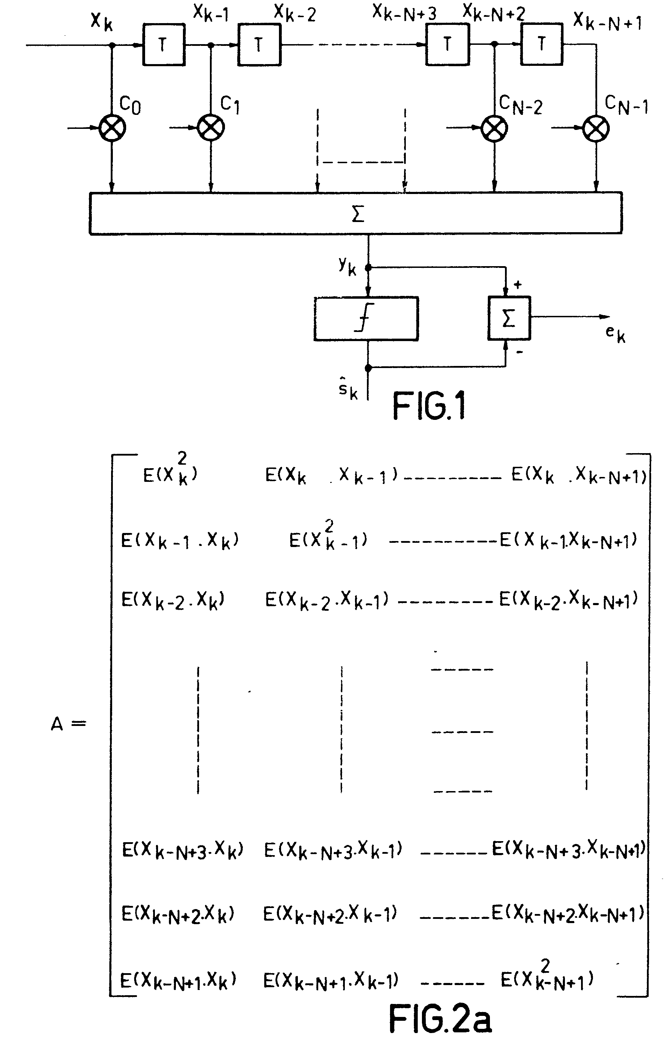

On sait en effet qu'aux débits de transmission élevés, une restitution correcte, en sortie du canal de transmission, des signaux émis à son entrée n'est plus possible sans la présence d'un circuit de compensation dit égaliseur et qui est souvent constitué par un filtre transversal non récursif, c'est-à-dire par un circuit capable de corriger la réponse d'un canal de transmission à partir d'une somme finie et pondérée de réponses partielles disponibles sur des prises successives d'un réseau d'impédances à base de lignes à retard ; un égaliseur de type classique, à N coefficients de pondération, est représenté sur la figure 1 (une description d'un égaliseur à sept coefficients est faite dans la revue IEEE Transactions on information theory, volume IT-15, N° 4, juillet 1969, pages 484 à 497). Comme la réponse impulsionnelle du canal n'est pas connue et est en outre susceptible d'évoluer dans le temps, l'égaliseur doit être adaptatif, c'est-à-dire pouvoir, au début de la liaison, ajuster ses coefficients de pondération à leurs valeurs optimales (c'est la phase dite d'acquisition ou d'apprentissage de l'égaliseur), et suivre ensuite les variations éventuelles du canal pendant la phase de transmission proprement dite. Cette adaptativité se traduit par le fait que l'égaliseur génère un signal d'erreur qui est fonction de la différence entre la forme exacte des données numériques émises et la forme qu'elles ont en sortie de l'égaliseur, et rend alors cette erreur minimale.

Pour une utilisation efficace du système de réception, la phase d'apprentissage doit être la plus courte possible, ce qui revient à dire que la méthode de détermination des coefficients optimaux de l'égaliseur adaptatif doit converger le plus rapidement possible. En raison de leur aptitude à suivre les variations temporelles du canal de transmission des données, on utilise souvent des méthodes de détermination itératives, telle la méthode du gradient stochastique. Mais la vitesse de convergence de cette méthode diminue au fur et à mesure que les valeurs propres de la matrice de corrélation A des signaux de sortie du canal de transmission sont plus dispersées, c'est-à-dire que la distorsion d'amplitude introduite par le canal est plus importante. Si le canal était parfait et son spectre parfaitement plat, la distorsion serait nulle, et toutes les valeurs propres de A seraient égales à 1. En réalité, dès que le canal introduit une distorsion sensible en amplitude (ou dès qu'une interférence entre symboles est volontairement créée pour des raisons de mise en forme spectrale), la mise en œuvre de la méthode du gradient stochastique devient inefficace.

Une vitesse de convergence satisfaisante peut être obtenue par mise en œuvre de la méthode itérative d'égalisation, dite auto-orthogonalisante, décrite dans l'article de R.D. Gitlin et F.R. Magee « Self-orthogonalizing adaptative equalization algorithms », paru dans la revue IEEE Transactions on Communications, volume COM-25, N° 7, juillet 1977, pages 666 à 672, mise en œuvre dont le filtre de Kalman (appliqué au domaine de l'égalisation par D. Godard, voir à ce propos la référence bibliographique N° 16, page 672, de cet article) constitue un cas particulier. Cependant, par rapport à celle du gradient stochastique, cette méthode est caractérisée par une complexité fortement accrue des circuits assurant sa mise en œuvre (c'est-à-dire par une augmentation importante du nombre d'opérations devant être effectuées au cours de chaque itération).

Le document IBM Technical Disclosure Bulletin, Vol. 17, n° 2, pages 447 à 451, « Algorithms for accelerating convergence of adaptative equalizers », par A. Desblache et al., paru en juillet 1974, décrit deux algorithmes de détermination itérative des coefficients de pondération d'un filtre transversal adaptatif, destinés l'un et l'autre à être incorporés dans un système d'égalisation adaptative, c'est-à-dire un système qui, à la réception de données numériques présentes en sortie d'un canal introduisant dans la transmission de ces données des distorsions d'amplitude et de phase, assure la compensation de ces distorsions par une détermination, ici itérative, des coefficients de pondération du filtre transversal constituant le circuit d'égalisation.

Si le second de ces algorithmes est un algorithme du gradient modifié qui ne présente pas de rapport avec la présente invention, le premier, en revanche, est intéressant en ce sens qu'il fait appel à une matrice constituant une approximation de la matrice inverse de la matrice de corrélation de signaux. Mais la nature des signaux ainsi corrélés (voir page 449, paragraphe « First algorithm », la formule qui apparaît à la ligne 3 de ce paragraphe) ne conduit pas à des propriétés suffisamment intéressantes de la matrice ainsi obtenue, par rapport aux réalisations connues jusqu'à présent.

Le but de l'invention est de proposer un système d'égalisation adaptative dans lequel la détermination des valeurs des coefficients de l'égaliseur par itérations successives est réalisée avec une vitesse de convergence aussi rapide que dans le cas du document IBM-TDB qui vient d'être cité, mais dont les circuits sont cependant beaucoup plus simples.

L'invention concerne à cet effet un système d'égalisation correspondant au préambule de la revendication 1.

Afin d'atteindre ledit but, le système comporte les caractéristiques de la revendication 1.

Le système peut comporter en addition, dans un deuxième exemple de réalisation, les caractéristiques de la revendication 2.

D'autres particularités de l'invention apparaîtront plus clairement dans la description détaillée qui suit et en se référant aux dessins annexés dans lesquels :

la figure 1   montre un filtre transversal non récursif de type connu, à N coefficients de pondération ;

la figure 2a   représente la matrice A de corrélation de N échantillons successifs du processus aléatoire x(t) auquel correspondent les vecteurs-signaux successifs $X_k$ de sortie du canal de transmission, la figure 2b une forme plus simple de cette matrice A compte tenu du fait que x(t) est un processus aléatoire de type stationnaire, et la figure 2c une forme encore simplifiée compte tenu de la longueur de la réponse échantillonnée du canal ;

la figure 3a   représente, dans le cas où par exemple N est impair et égal à 2S + 1, la matrice circulante R choisie, à partir de la figure 2b, pour constituer l'approximation de la matrice A, et la figure 3b une forme simplifiée de cette matrice R compte tenu de la longueur I de la réponse échantillonnée du canal ;

la figure 4   montre quelle partition peut être opérée dans la structure du produit matriciel de l'inverse de la matrice R par la matrice A ;

la figure 5   montre un premier exemple de réalisation du système de réception selon l'invention ;

les figures 6a et 6b   montrent deux variantes de structure d'un deuxième exemple de réalisation du système de réception selon l'invention.

Pour présenter les deux exemples de réalisation, décrits plus loin, du système selon l'invention, on supposera tout d'abord que le système d'émission présent en amont du canal de transmission émet un train de données binaires $s_k$ non corrélées, égales à $\pm 1$, que la réponse impulsionnelle de l'ensemble formé par le canal de transmission, les filtres d'émission et les filtres de réception est h(t), et que le récepteur est en parfaite synchronisation avec l'émetteur.

Si x(t) est le signal reçu et échantillonné à la cadence de I/T (T étant la durée d'un symbole) et si l'échantillon entrant dans l'égaliseur à un instant $t_0 + kT$ est défini par la relation :

$$x_k = \left( \sum_{j=0}^{j=1-1} h_j \cdot s_{k-j} \right) + n_k \qquad (1)$$

dans laquelle I est la longueur de la réponse échantillonnée du canal de transmission et $n_k$ le bruit à l'instant $t_0 + kT$, on peut alors définir pour un égaliseur adaptatif à N coefficients de pondération $c_0$, $c_1$, $C_2$, ..., $c_{N-2}$, $c_{N-1}$ (voir la figure 1) les vecteurs-colonnes suivants, écrits par commodité sous la forme équivalente des vecteurs-lignes transposés (TR indiquant l'opération de transposition) :

$$X_k = [x_k, x_{k-1}, ..., x_{k-N+2}, x_{k-N+1}]^{TR} \qquad (2)$$

et

$$C = [c_0, c_1, c_2, ..., c_{N-2}, c_{N-1}]^{TR} \qquad (3)$$

Par définition, le signal de sortie de l'égaliseur, avant décision, est :

$$y_k = c^{TR} X_k \qquad (4)$$

ou, ce qui est équivalent :

$$y_k = X_k^{TR} C \qquad (4 \text{ bis})$$

et l'écart, à l'instant défini par k, entre $y_k$ et la donnée numérique $s_{k-d}$ correspondante est donné par la relation :

$$e_k = C^{TR} \cdot X_k - s_{k-d} \quad (\text{ou} : e_k = X_k^{TR} \cdot C - s_{k-d}) \qquad (5)$$

(on considère que la décision concernant chaque symbole transmis se produit avec un retard $d \cdot T$ par rapport à l'émission de ce symbole, ce retard $d \cdot T$ pouvant d'ailleurs être optimisé pour minimiser l'erreur quadratique moyenne, comme cela est indiqué notamment dans un article de P. Butler et A. Cantoni, « Non-iterative automatic equalization », paru dans la revue IEEE Transactions on Communications, volume COM-23, N° 6, aux pages 622, § III-A, lignes 5-6 et 624, § C, de cet article.)

Dans la technique des égaliseurs, il existe différents critères pour réduire cet écart entre la forme exacte des signaux émis et la forme estimée qu'ils ont en sortie de l'égaliseur. On retiendra ici l'un des plus fréquemment utilisés, à savoir le critère de minimisation de l'erreur quadratique moyenne, et l'on cherchera donc à choisir le vecteur C de façon à minimiser la valeur moyenne de $e_k^2$.

En utilisant simultanément les deux relations équivalentes (4) et (4 bis), on a :

$$e_k^2 = (C^{TR} X_k - s_{k-d}) (X_k^{TR} C - s_{k-d})$$
$$e_k^2 = C^{TR} X_k X_k^{TR} C - 2 C^{TR} \cdot X_k s_{k-d} + 1 . \qquad (6)$$

3

On prend la valeur moyenne de $e_k{}^2$, soit :

$$E(e_k^2) = C^{TR} \cdot A \cdot C - 2\,C^{TR} \cdot V + 1 \qquad (7)$$

équation dans laquelle, E étant l'opérateur de valeur moyenne, on a :

$$A = E(X_k X_k{}^{TR}) \qquad (8)$$

et

$$V = E(X_k s_{k-d}) \, . \qquad (9)$$

La relation (7) définit l'erreur quadratique moyenne pour un vecteur C donné, erreur que l'on veut minimiser en fonction de C. Pour cela, on doit avoir :

$$\text{gradient } (C) = G(C) = \partial E/\partial C = 2\,(AC - V) = 0$$

G(C) est nul si AC = V, c'est-à-dire si :

$$C = A^{-1} V \qquad (10)$$

Le vecteur C recherché pourrait donc être obtenu par résolution directe de l'équation (10). Cette résolution est considérée comme difficile, car elle implique l'inversion de la matrice A c'est-à-dire la réalisation d'un très grand nombre d'opérations, mais une méthode originale de détermination directe d'un vecteur approché de C, évitant une telle complexité, est proposée et décrite dans la demande de brevet EP-A-81 200 499-2 également déposée au nom de la Demanderesse.

Cependant, on a vu plus haut pour quelle raison on utilise plus souvent les méthodes itératives. Conformément à l'invention qui fait l'objet de la présente demande et qui va donc concerner une méthode itérative originale de détermination du vecteur des coefficients de pondération de l'égaliseur, on considère d'abord l'expression de détermination itérative suivante :

$$C_{k+1} = C_k - \alpha_k \cdot A_k^{-1} X_k\, e_k \qquad (11)$$

qui est du type de celle utilisée dans l'égaliseur transversal du système de réception décrit dans l'article de Gitlin et Magee cité plus haut, et dans laquelle :

$C_k$ = vecteur C à l'instant $t_0 + kT$

$C_{k+1}$ = vecteur C à l'instant $t_0 + (k + 1)T$

$\alpha_k$ = pas d'itération (fixe ou variable)

$A^{-1}{}_k$ = inverse de la matrice $A_k$ définie par :

$$A_k = \frac{1}{k} \sum_{i=1}^{i=k} X_i X_i^{TR}$$

($A_k$ = matrice estimée, à l'instant kT, de la matrice de corrélation A.)

Dans l'expression (11), à chaque itération il faut mettre à jour l'estimation $A^{-1}$ par la relation suivante :

$$A_k^{-1} = \frac{k}{k-1} \left[ A_{k-1}^{-1} - \frac{A_{k-1}^{-1} X_k X_k^{TR} A_{k-1}^{-1}}{k - 1 + X_k^{TR} A_k^{-1} X_k} \right] . \qquad (12)$$

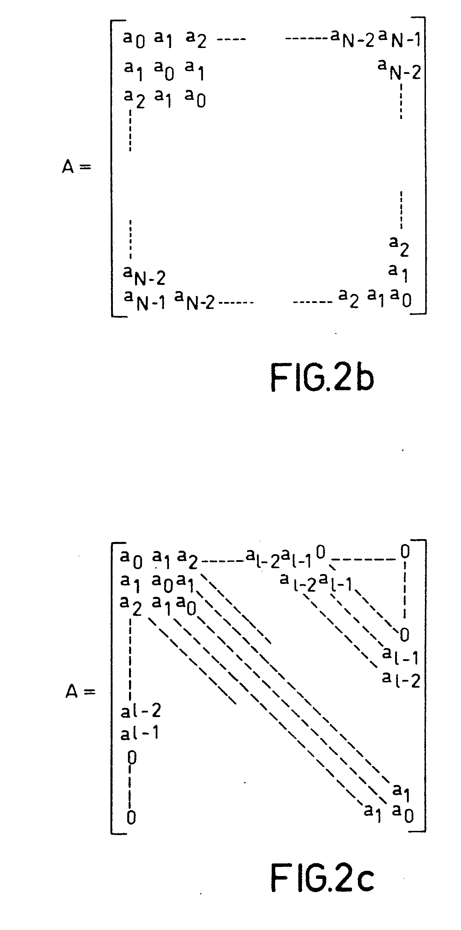

La relation (12) montre bien la complexité de la solution adoptée dans le système décrit dans l'article de Gitlin et Magee. Mais, comme $A^{-1}{}_k$ tend rapidement vers $A^{-1}$, on peut éviter cette complexité en recherchant une approximation de la matrice $A^{-1}$, et donc de la matrice A. Une telle détermination part des observations suivantes : la matrice A définie par la relation (8) et représentée sur la figure 2a, est la matrice de corrélation de N échantillons successifs du processus aléatoire x(t). Ce processus étant de type stationnaire, tous les termes $E(x_i^2)$ sont égaux ; pour la même raison, tous les termes $E(x_i \cdot x_j)$ pour lesquels $|i - j|$ est constant sont aussi égaux. Il en résulte que la matrice A est symétrique, que ses termes diagonaux sont égaux, et qu'elle peut donc être présentée sous la forme définie sur la figure 2b. D'autre part, comme I est la longueur de la réponse échantillonnée du canal, tous les termes $E(x_i \cdot x_j)$ dans lesquels l'écart entre i et j est égal ou supérieur à I sont nuls, puisqu'ils correspondent à des signaux reçus entre lesquels il n'y a plus aucune corrélation. La matrice A prend donc, en définitive, la forme simplifiée représentée sur la figure 2c.

Cette matrice A est quasi diagonale (de même que sa matrice inverse $A^{-1}$ aux effets de bord près) et l'on peut en définir une approximation, d'autant meilleure que le nombre N des coefficients de l'égaliseur est choisi plus grand devant la longueur I, qui est une matrice R dite circulante construite de la façon suivante. Si $(a_0, a_1, a_2, ..., a_{N-2}, a_{N-1})$ est la première ligne de A et $(r_0, r_1, r_2, ..., r_{N-1})$ la première ligne de R, on a $r_i = a_i$ pour tout i inférieur ou égal à N/2 si N est pair ou à $(N - 1)/2$ si N est impair, et $r_i = a_{N-i}$ pour tout i supérieur aux mêmes limites.

4

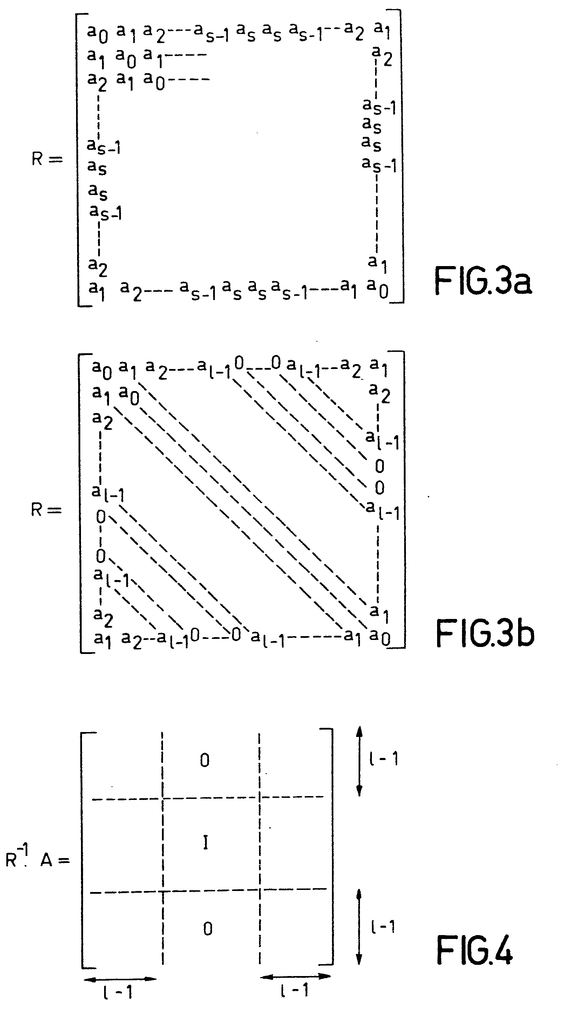

Les lignes suivantes de R, de rang 2 à N, comprennent les mêmes termes que la première ligne de R, mais après permutation circulaire de ces termes vers la droite : après une permutation circulaire vers la droite pour la deuxième ligne par rapport à la première, après une nouvelle permutation circulaire vers la droite pour la troisième ligne par rapport à la deuxième, et ainsi de suite jusqu'à la Nième ligne de R. Dans le cas où N est par exemple impair et égal à (2S + 1) la matrice R ainsi obtenue est représentée sur la figure 3a ; comme la matrice A, cette matrice R peut prendre la forme simplifiée représentée sur la figure 3b et correspondant à la forme simplifiée de A représentée sur la figure 2c.

Puisque $A^{-1}_k$ tend rapidement vers $A^{-1}$, l'expression (11) devient :

$$C_{k+1} = C_k - \alpha_k A^{-1} X_k e_k \qquad (12)$$

et, en en prenant la valeur moyenne, on a :

$$E(C_{k+1}) = E(C_k) - \alpha_k A^{-1} E(X_k e_k) . \qquad (14)$$

D'après les relations 4, 4 bis, et 5, on a :

$$e_k = X_k^{TR} C_k - s_{k-d} .$$

D'où :

$$E(X_k e_k) = E(X_k X_k^{TR}) C_k - E(X_k \cdot s_{k-d})$$

$$E(X_k e_k) = AC_k - V$$

$$E(X_k e_k) = AC_k - AC = A(C_k - C) = A\tilde{C}_k$$

et en reportant dans (14), il vient :

$$E(C_{k+1}) = E(C_k) - \alpha_k \tilde{C}_k . \qquad (15)$$

Cette relation (15) fournit à chaque itération la direction optimale de déplacement et, par conséquent, converge très rapidement. On voit aussi l'intérêt, pour éviter une mise à jour difficile de la matrice estimée de $A^{-1}$, remplacer $A^{-1}$ par une matrice qui en constitue une bonne approximation, par $R^{-1}$ dans le cas présent. Le calcul de $R^{-1} \cdot A$ entrepris pour justifier cette approximation montre en effet que ce produit matriciel a la forme représentée sur la figure 4, et comprend :
— un noyau central identique à la matrice identité d'ordre N − 2 (I − 1) ;
— au-dessus et au-dessous de cette matrice identité, des termes nuls ; et
— de part et d'autre des colonnes incluant cette matrice identité et ces termes nuls, 2 (I − 1) colonnes comprenant des termes quelconques.

Compte tenu de cette structure du produit $R^{-1} \cdot A$ et de la partition qui vient d'y être opérée pour en montrer le caractère particulier (et du fait que l'étude mathématique de la matrice R montre que celle-ci est toujours définie et que sa matrice inverse existe toujours), la matrice R telle que définie plus haut est asymptotiquement équivalente à la matrice A, et en constitue une bonne approximation (satisfaisante même si le nombre N des coefficients n'est pas très grand).

Ayant ainsi justifié l'approximation de A par R, il résulte du fait que A est la limite de son estimée $A_k$ à l'instant $t_0 + kT$ que R est également la limite de son estimée $R_k$ à l'instant $t_0 + kT$. L'expression (12), qui pouvait s'écrire :

$$C_{k+1} = C_k - \alpha_k R^{-1} X_k e_k \qquad (16)$$

peut donc maintenant, à juste titre, être écrite :

$$C_{k+1} = C_k - \alpha_k R_k^{-1} X_k e_k . \qquad (17)$$

La diagonalisation de la matrice $R_k$ permet d'écrire :

$$R_k^{-1} = PG_k^{-1} P^{cc} \qquad (18)$$

avec $G^{-1}_k$ = matrice diagonale dont les éléments diagonaux sont les inverses des valeurs propres

$$\lambda_0^{(k)}, \lambda_1^{(k)}, \lambda_2^{(k)}, ..., \lambda_{N-2}^{(k)}, \lambda_{N-1}^{(k)} \text{ de la matrice } R_k ;$$

de la matrice $R_k$ ;

avec : P = matrice unitaire symétrique d'ordre N, connue à priori puisqu'indépendante de $R_k$ et commune

à toutes les matrices circulantes et dont les colonnes sont les vecteurs propres de la matrice $R_k$ (cette matrice P peut être définie par :

$$P = \| P_{f,g} \| \quad (f, g = 0, 1, 2, ..., N - 2, N - 1)$$

$$P_{f,g} = \frac{1}{\sqrt{N}} \exp\left(j\,\frac{2\,\pi f g}{N}\right)$$

et la multiplication d'un vecteur par cette matrice fournit, au coefficient $1/\sqrt{N}$ près, la transformée de Fourier discrète inverse, ou TFD inverse, de ce vecteur) ;

et avec : $P^{cc}$ = matrice complexe conjuguée de P (de même, cette matrice $P^{cc}$ peut être définie par :

$$P^{cc} = \| P^{cc}_{f,g} \| \quad (f, g = 0, 1, 2, ..., N - 2, N - 1)$$

$$P^{cc}_{f,g} = \frac{1}{\sqrt{N}} \exp\left(- j\,\frac{2\,\pi f g}{N}\right)$$

et la multiplication d'un vecteur par $P^{cc}$ fournit au coefficient $1/\sqrt{N}$ près, la transformée de Fourier discrète, ou TFD, de ce vecteur).

En reportant l'expression (18) dans l'expression (17), il vient :

$$C_{k+1} = C_k - \alpha_k \, PG_k^{-1} \, P^{cc} \, X_k \, e_k \qquad (19)$$

(on notera dès à présent que le vecteur

$$\Lambda_k = (\lambda_0^{(k)}, \lambda_1^{(k)}, \lambda_2^{(k)}, ..., \lambda_{N-2}^{(k)}, \lambda_{N-1}^{(k)})^{TR}$$

des N valeurs propres de $R_k$ est obtenu à l'aide de la relation suivante :

$$\Lambda_k = \sqrt{N} \cdot P \cdot U \qquad (20)$$

dans laquelle P vient d'être définie, et U est le vecteur-colonne des N éléments de la première colonne de $R_k$).

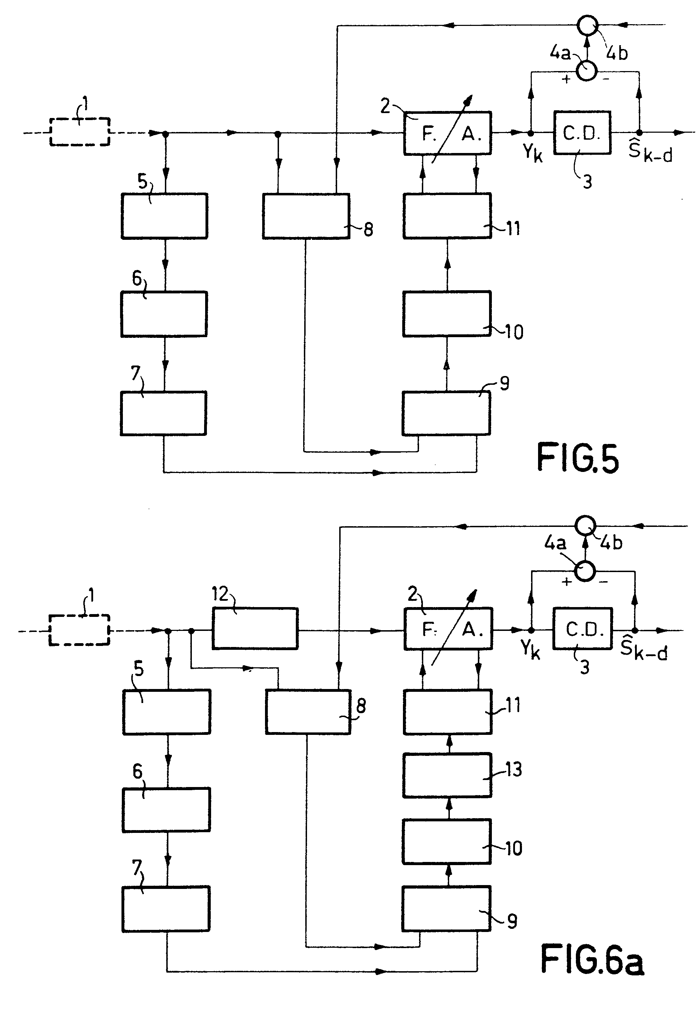

De l'expression (19), on peut déduire une première structure de système de réception de données numériques permettant d'obtenir par itérations successives le vecteur des coefficients de pondération optimaux pour le filtre adaptatif de ce système. Ce système, représenté sur la figure 5, comprend d'abord, en sortie d'un canal de transmission 1 des données, un filtre adaptatif non récursif 2, à coefficients de pondération réglables, noté F.A., qui reçoit le vecteur-signal de sortie $X_k$ du canal de transmission. Ce filtre est suivi d'un circuit de décision 3, noté C.D., qui fournit à partir du signal de sortie $y_k$ du filtre une estimation $\hat{s}_{k-d}$ de chacune des données numériques $s_{k-d}$ émises à l'entrée du canal (exclusivement pendant la phase dite d'acquisition ou d'apprentissage, le système connaît les données numériques émises et l'estimation $\hat{s}_{k-d}$ est alors toujours égale à la donnée $s_{k-d}$ elle-même). Un sommateur 4a, recevant d'une part $y_k$ et d'autre part $\hat{s}_{k-d}$ délivre un signal $e_k = y_k - \hat{s}_{k-d}$ qui représente l'écart entre la sortie du filtre et l'estimation de la donnée émise ; un circuit de multiplication 4b de $e_k$ par le pas $\alpha_k$ délivre la grandeur scalaire $\alpha_k e_k$.

Pour la détermination des coefficients de pondération du filtre 2, le système de la figure 5 comprend également :

un circuit d'estimation 5 de la matrice carrée $A_k$, matrice estimée à l'instant $t_0 + kT$ de la matrice de corrélation des vecteurs $X_k$. On a en fait observé précédemment d'une part que, dans chaque ligne ou colonne de $A_k$, un certain nombre de termes étaient nuls et d'autre part que tous les termes non nuls de $A_k$ étaient déjà contenus dans sa première ligne (ou colonne). De ces observations, il résulte que l'estimation de $A_k$ ne signifie pas l'estimation de $N^2$ éléments, mais simplement, dans la première ligne de la matrice $A_k^e$ estimée à l'instant $t_0 + kT$ de A, l'estimation des $(N/2 + 1)$ premiers termes $a_i^{(k)}$ si N est pair ou des $(N + 1)/2$ premiers termes $a_i^{(k)}$ si N est impair, à partir de la relation

$$a_i^{(k)} = \beta a_i^{(k-1)} + x_k^* \cdot x_{k-i},$$

($\beta$ étant compris entre les valeurs 0 et 1 exclues). Cette importante réduction du nombre de termes à estimer est très avantageuse sur le plan de la simplicité des circuits ;

un circuit d'approximation 6 de la matrice $A_k$ par une matrice circulante $R_k$, cette approximation de $A_k$ par $R_k$ étant simplement obtenue par substitution à la première ligne

$$(a_0^{(k)}, a_1^{(k)}, a_2^{(k)}, ..., a_{N-2}^{(k)}, a_{N-1}^{(k)})$$

de $A_k$ d'une première ligne

$$(r_0^{(k)}, r_1^{(k)}, r_2^{(k)}, ..., r_{N-2}^{(k)}, r_{N-1}^{(k)})$$

dans laquelle on a $r_i = a_i$ pour tout i au plus égal à N/2 si N est pair ou à $(N − 1)/2$ si N est impair et $r_i = a_{N−i}$ pour tout i supérieur aux mêmes limites. Comme $R_k$ est circulante, la détermination de sa première ligne suffit en effet pour la connaissance de la matrice entière, et l'approximation de $A_k$ par $R_k$ revient donc, plus simplement, à la formation du vecteur

$$U^{(k)} = (r_0^{(k)}, r_1^{(k)}, r_2^{(k)}, ..., r_{N−2}^{(k)}, r_{N−1}^{(k)})$$

dans lequel on a

$$r_i^{(k)} = a_i^{(k)}$$

pour tout i au plus égal à N/2 si N est pair ou à $(N − 1)/2$ si N est impair et

$$r_i^{(k)} = a_{N−i}^{(k)}$$

pour tout i supérieur aux mêmes limites ;

un circuit de calcul de la matrice diagonale $G_k$ dont les termes diagonaux sont les valeurs propres de la matrice circulante $R_k$, circuit qui, compte tenu des simplifications déjà effectuées en (A) et (B), consiste en fait en un circuit de détermination 7 d'un vecteur $\Lambda$ de N valeurs propres $\lambda_0, \lambda_1, \lambda_2, ..., \lambda_{N−2}, \lambda_{N−1}$ à l'aide de la relation $\Lambda = \sqrt{N} \cdot P \cdot U^{TR}$ dans laquelle $U^{TR}$ est le vecteur transposé du vecteur U formé en (B) et P est la matrice unitaire déjà définie ;

un circuit 8 de calcul du vecteur $Q^{(k)} = \alpha_k e_k P^{cc} X_k$, assurant en fait la multiplication du vecteur $X_k$ par la matrice $P^{cc}$ complexe conjuguée de P et la multiplication du vecteur ainsi obtenu par la grandeur scalaire $\alpha_k e_k$ ;

un circuit de multiplication de la sortie du circuit 8 par la matrice diagonale $G_k^{-1}$, ce circuit consistant en fait, en raison des simplifications déjà opérées, en un circuit de division 9 du vecteur $Q^{(k)}$ ainsi obtenu par le vecteur $\Lambda^{(k)}$, cette division étant effectuée terme à terme de façon que les termes du vecteur

$$F^{(k)} = (f_0^{(k)}, f_1^{(k)}, f_2^{(k)}, ..., f_{N−2}^{(k)}\ f_{N−1}^{(k)}) = Q^{(k)}/\Lambda^{(k)}$$

soient fournis par l'expression

$$f_i^{(k)} = q_i^{(k)}/\lambda_i^{(k)},$$

quel que soit i ;

un circuit de multiplication 10 du vecteur $F^{(k)}$ ainsi obtenu par la matrice P ;
un circuit d'évaluation 11 du vecteur

$$C_{k+1} = C_k − P \cdot F^{(k)} = C_k − H^{(k)}$$

qui, à l'instant $t_0 + (k + 1)T$, représente le vecteur des N coefficients de pondération du filtre transversal 2, qui est obtenu par différence entre le vecteur $C_k$ évalué de façon similaire au cours de l'étape itérative précédente correspondant à l'instant $t_0 + kT$ et le vecteur $H^{(k)}$ de sortie du circuit 10, et qui permet la mise à jour de ces coefficients par remplacement de $C_k$ par $C_{k+1}$.

Une deuxième structure de système de réception conforme à l'invention peut être déduite de l'expression (19) obtenue plus haut si l'on effectue une multiplication des deux membres de cette expression par $P^{cc}$. On obtient en effet :

$$P^{cc} C_{k+1} = P^{cc} C_k − \alpha_k P^{cc} PG_k^{-1} P^{cc} X_k e_k \qquad (21)$$

$$D_{k+1} = D_k − \alpha_k G_k^{-1} P^{cc} X_k e_k . \qquad (21bis)$$

Sur la figure 6a, cette multiplication de l'expression (19) par $P^{cc}$ se traduit, par rapport à la figure 5, par l'apparition de deux circuits supplémentaires 12 et 13. Le circuit 12 assure la multiplication du vecteur-signal de sortie $X_k$ du canal de transmission 1 par la matrice unitaire P, afin de délivrer un signal $Z_k$ fourni au filtre transversal 2, et le circuit 13 inséré entre les circuits 10 et 11 assure la multiplication de la sortie du circuit 10 par la matrice $P^{cc}$. Comme, par ailleurs, le signal de sortie du filtre était, dans le cas de la première structure ci-dessus décrite, donné par

$$y_{k+1} = X_{k+1}^{TR} C_{k+1}$$

(d'après la relation 4 bis) et que cette expression peut également être écrite ainsi :

$$y_{k+1} = X_{k+1}^{TR}(PP^{cc}) C_{k+1} ,$$

il vient :
$$y_{k+1} = (X_{k+1}^{TR} P) \cdot (P^{cc} C_{k+1}) , \qquad (22)$$

$$y_{k+1} = Z_{k+1}^{TR} \cdot D_{k+1} .$$

Pour que le signal de sortie du filtre 2 au cours de l'itération correspondant à l'instant $t_0 + (k + 1)T$ soit le même que dans le cas de la première structure, le circuit 11 doit donc maintenant délivrer le vecteur $D_{k+1} = P^{cc} \cdot C_{k+1}$ obtenu par différence entre le vecteur $D_k$ évalué au cours de l'étape itérative précédente correspondant à l'instant $t_0 + kT$ et le vecteur de sortie $P^{cc} \cdot H^{(k)}$ du circuit 13.

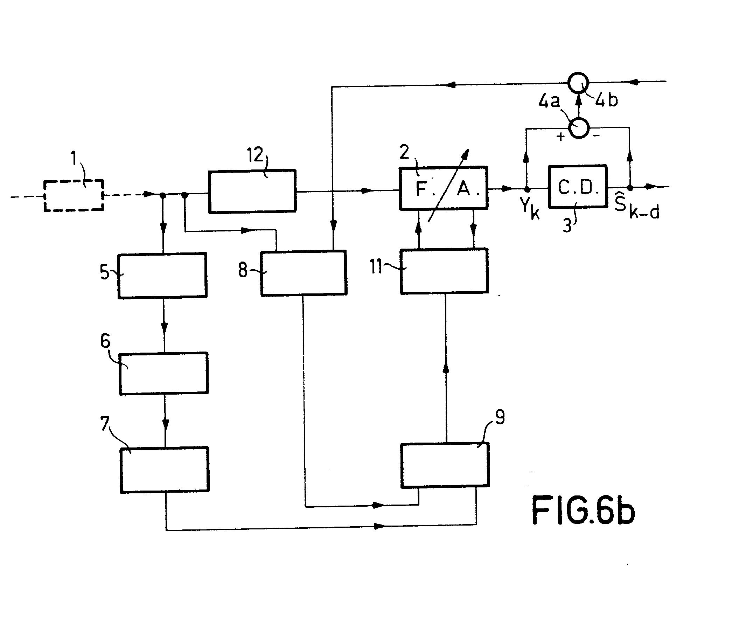

Au vu de la figure 6a correspondant à la deuxième structure ainsi décrite, on constate qu'avec l'introduction du circuit 13, les circuits 10 et 13 effectuent successivement des opérations inverses l'une de l'autre (multiplication par la matrice P, puis multiplication par la matrice $P^{cc}$). Ces deux circuits peuvent donc être omis simultanément, ce qui conduit à la variante de réalisation simplifiée de la figure 6b.

Bien entendu, d'autres variantes de réalisation pourraient encore être proposées sans pour cela sortir du cadre de l'invention.

**Revendications**

1. Système d'égalisation adaptative de données numériques présentes en sortie d'un canal (1) introduisant dans la transmission des données des distorsions d'amplitude et de phase, ce système comprenant, à la suite du canal (1) délivrant un vecteur-signal de sortie $X_k$, un filtre transversal (2) non récursif à N coefficients de pondération réglables, suivi d'un circuit de décision (3) destiné à fournir à partir du signal de sortie $y_k$ du filtre une estimation $\hat{s}_{k-d}$ de chacune des données numériques $s_{k-d}$ émises à l'entrée du canal, ledit filtre transversal comprenant notamment, pour la détermination par itérations successives des N coefficients de pondération, des moyens de calcul matriciel d'un vecteur du type $C_{k+1} = C_k - f[G^{-1}]$ où $C_k$ et $C_{k+1}$ sont les vecteurs-colonnes des coefficients de pondération respectivement à l'instant $t_0 + kT$, T étant la durée d'un symbole, et à l'instant $t_0 + (k + 1)T$ et où $f[G^{-1}]$ est une expression matricielle dans laquelle $G^{-1}$ est une approximation de la matrice inverse de la matrice carrée $A_k$ de corrélation des vecteurs-signaux $X_k$ de sortie du canal à l'instant $t_0 + kT$, caractérisé :

A) en ce que le filtre transversal (2) comprend également des moyens d'estimation d'une matrice circulante $R_k$ constituant ladite approximation de la matrice inverse de la matrice $A_k$, comprenant eux-mêmes :

a) un circuit d'estimation (5), dans la première ligne de la matrice $A_k^e$, estimée à l'instant $t_0 + kT$ de la matrice carrée $A_k$ de corrélation des vecteurs $X_k$, des $(N/2 + 1)$ premiers termes $a_i^{(k)}$ si N est pair, ou des $(N + 1)/2$ premiers termes $a_i^{(k)}$ si N est impair, l'estimation étant obtenue à partir de la relation :

$$a_i^{(k)} = \beta a_i^{(k-1)} + x_k^* \cdot x_{k-i} ,$$

avec $\beta$ compris entre les valeurs 0 et 1 exclues ;

b) un circuit de formation (6) d'un vecteur

$$U^{(k)} = r_0^{(k)}, r_1^{(k)}, r_2^{(k)}, ..., r_{N-2}^{(k)}, r_{N-1}^{(k)}$$

dans lequel on a

$$r_i^{(k)} = a_i^{(k)}$$

pour tout i au plus égal à N/2 si N est pair ou à $(N - 1)/2$ si N est impair et

$$r_i^{(k)} = a_{N-i}^{(k)}$$

pour tout i supérieur aux mêmes limites ;

B) et en ce que les moyens de calcul matriciel du vecteur $C_{k+1}$ comprennent :

c) un circuit de détermination (7) d'un vecteur $\Lambda^{(k)}$ de N valeurs propres

$$\lambda_0^{(k)} \text{ à } \lambda_{N-1}^{(k)}$$

à l'aide de la relation

$$\Lambda^{(k)} = \sqrt{N} \cdot P \cdot U^{(k)TR}$$

dans laquelle $U^{(k)TR}$ est le vecteur transposé du vecteur $U^{(k)}$ formé en (b) et P est la matrice unitaire d'ordre N définie par :

$$P = \| P_{f,g} \| \quad (f, g = 0, 1, 2, ..., N - 2, N - 1)$$
$$\left( \text{avec } P_{f,g} = \frac{1}{\sqrt{N}} \cdot \exp\left[ j \frac{2 \pi f g}{N} \right] \right) ;$$

d) un circuit de multiplication (8) permettant le calcul du vecteur $Q^{(k)} = \alpha_k e_k P^{cc} X_k$, expression dans laquelle $P^{cc}$ désigne la matrice complexe conjuguée de la matrice P ;

e) un circuit de division (9) du vecteur $Q^{(k)}$ ainsi obtenu par le vecteur $\Lambda^{(k)}$, cette division étant effectuée terme à terme de façon que les termes du vecteur

$$F^{(k)} : (f_0^{(k)}, f_1^{(k)}, f_2^{(k)}, ..., f_{N-2}^{(k)}, f_{N-1}^{(k)}) = Q^{(k)}/\Lambda^{(k)}$$

soient fournis par l'expression

$$f_i^{(k)} = q_i^{(k)}/\lambda_i^{(k)},$$

quel que soit i ;

f) un circuit de multiplication (10) du vecteur $F^{(k)}$ ainsi obtenu par la matrice P :

g) un circuit d'évaluation (11) du vecteur

$$C_{k+1} = C_k - P \cdot F^{(k)} = C_k - H^{(k)}$$

qui, à l'instant $t_0 + (k + 1)T$, représente le vecteur des N coefficients de pondération du filtre transversal (2), qui est obtenu par différence entre le vecteur $C_k$ évalué de façon similaire au cours de l'étape itérative précédente correspondant à l'instant $t_0 + kT$ et le vecteur $H^{(k)}$ de sortie du circuit (10), et qui permet la mise à jour de ces coefficients de pondération par remplacement de $C_k$ par $C_{k+1}$.

2. Système selon la revendication 1, caractérisé en ce qu'il comprend également :

h) un circuit de multiplication (12) du vecteur-signal de sortie $X_k$ du canal de transmission (1) par la matrice unitaire P, délivrant un signal de sortie $Z_k$ fourni à l'entrée du filtre (2) ;

i) un circuit de multiplication (13), inséré entre les circuits de multiplication (10) et d'évaluation (11) et destiné à assurer la multiplication du vecteur $H^{(k)}$ de sortie du circuit (10) par la matrice $P^{cc}$, pour permettre au circuit (11) d'évaluer le vecteur $D_{k+1} = P^{cc}C_{k+1}$ qui, à l'instant $t_0 + (k + 1)T$, représente le vecteur des N coefficients de pondération du filtre transversal (2) lorsque ce filtre reçoit le signal de sortie $Z_k$ du circuit de multiplication (12), qui est obtenu par différence entre le vecteur $D_k$ évalué de façon similaire au cours de l'étape itérative précédente correspondant à l'instant $t_0 + kT$ et le vecteur $P^{cc} \cdot H^{(k)}$ de sortie du circuit (13), et qui permet la mise à jour de ces coefficients de pondération par remplacement de $D_k$ par $D_{k+1}$.

## Claims

1. An adaptive equalizing system for digital data present at the output of a channel (1) introducing amplitude and phase distortion in the data transmission, the system comprising, arranged after the channel (1) producing an output signal vector $X_k$, a non-recursive transversal filter (2) having N adjustable weighting coefficients, followed by a decision circuit (3) intended to produce from the filter output signal $y_k$ an estimation $\hat{s}_{k-d}$ of each of the digital data $s_{k-d}$ transmitted to the input of the channel, said transversal filter comprising more specifically for a determination of the N weighting coefficients by successive iterations, matrix means for calculating a vector of the type $C_{k+1} = C_k - f[G^{-1}]$ where $C_k$ and $C_{k+1}$ are the respective column vectors of the weighting coefficients at the instant $t_0 + kT$, T being the duration of a symbol, and at the instant $t_0 + (k + 1)T$ and where $f[G^{-1}]$ is a matrix expression in which $G^{-1}$ is an approximation of the inverse of the square correlation matrix $A_k$ of the signal vectors $X_k$ at the output of the channel at the instant $t_0 + kT$, characterized :

A) in that the transversal filter (2) also comprises means for estimating a circulant matrix $R_k$ constituting said approximation of the inverse matrix of the matrix $A_k$, said means comprising :

a) a circuit (5) for estimating in the first row of the matrix $A_k^e$, estimated at the instant $t_0 + kT$, of the square correlation matrix $A_k$ of the vectors $X_k$, the $(N/2 + 1)$ first terms $a_i^{(k)}$ if N is even, or the $(N + 1)/2$ first terms $a_i^{(k)}$ if N is odd, the estimation being obtained from the relation :

$$a_i^{(k)} = \beta a_i^{(k-1)} + x_k^* \cdot x_{k-i}$$

where $\beta$ is comprised in the range between 0 and 1, exclusive of 0 and 1 ;

b) a circuit (6) for forming a vector

$$U^{(k)} = (r_0^{(k)}, r_1^{(k)}, r_2^{(k)}, ..., r_{N-2}^{(k)}, r_{N-1}^{(k)})$$

in which

$$r_i^{(k)} = a_i^{(k)}$$

for every i not exceeding N/2 if N is even or not exceeding $(N - 1)/2$ if N odd and

$$r_i^{(k)} = a_{N-i}^{(k)}$$

for every i exceeding said limits ;

B) and in that the matrix means for calculating the vector $C_{k+1}$ comprise :

c) a circuit (7) for determining a vector $\Lambda^{(k)}$ having N eigen values

$$\lambda_0^{(k)} \text{ à } \lambda_{N-1}^{(k)}$$

with the aid of the relation

$$\Lambda^{(k)} = \sqrt{N} \cdot P \cdot U^{(k)TR}$$

in which $U^{(k)TR}$ is the transpose of the vector $U^{(k)}$ formed sub (b) and P is the unitary matrix of the order N defined by the :

$$P = \| P_{f,g} \| \quad (f, g = 0, 1, 2, ..., N - 2, N - 1)$$

$$\left( \text{where } P_{f,g} = \frac{1}{\sqrt{N}} \cdot \exp\left[ j \frac{2\,\pi f g}{N} \right] \right) ;$$

d) a multiplying circuit (8) for calculating the vector $Q^{(k)} = \alpha_k e_k P^{cc} X_k$, in which expression $P^{cc}$ indicates the complex conjugate matrix of the matrix P ;

e) a circuit (9) for dividing the vector $Q^{(k)}$ thus obtained by the vector $\Lambda^{(k)}$, this dividing operation being effected term-by-term such that the terms of the vector

$$F^{(k)} : (f_0^{(k)}, f_1^{(k)}, f_2^{(k)}, ..., f_{N-2}^{(k)}, f_{N-1}^{(k)}) = Q^{(k)}/\Lambda^{(k)}$$

are supplied by the expression

$$f_i^{(k)} = q_i^{(k)}/\lambda_i^{(k)} ,$$

whatever the value of i ;

f) a circuit (10) for multiplying the vector $F^{(k)}$ thus obtained by the matrix P :

g) a circuit (11) for evaluating the vector

$$C_{k+1} = C_k - P \cdot F^{(k)} = C_k - H^{(k)} = C_k - H^{(k)}$$

which, at the instant $t_0 + (k + 1) T$, represents the vector of the N weighting coefficients of the transversal filter (2), which is obtained by determining the difference between the vector $C_k$ evaluated in a similar way during the preceeding iterative stage corresponding to the instant $t_0 + kT$ and the output vector $H^{(k)}$ of the circuit (10), and which makes it possible to update these weighting coefficients by substituting $C_{k+1}$ for $C_k$.

2. A system as claimed in Claim 1, characterized in that it also comprises :

h) a circuit (12) for multiplying the output signal vector $X_k$ of the transmission channel (1) by the unitary matrix P, producing an output signal $Z_k$ applied to the input of the filter (2) ;

i) a multiplying circuit (13), inserted between the multiplying circuit (10) and the estimating circuit (11) and intended to provide multiplication of the output vector $H^{(k)}$ of the circuit (10) by the matrix $P^{cc}$, for enabling the circuit (11) to estimate the vector $D_{k+1} = P^{cc} C_{k+1}$ which, at the instant $t_0 + (k + 1)T$, represents the vector of the N weighting coefficients of the transversal filter (2) when this filter receives the output signal $Z_k$ of the multiplying circuit (12), obtained by determining the difference between the vector $D_k$ estimated in a similar way during the preceding iterative stage corresponding to the instant $t_0 + kT$ and the output vector $P^{cc} \cdot H^{(k)}$ of the circuit (13), and which makes it possible to update these weighting coefficients by substituting $D_{k+1}$ for $D_k$.

**Patentansprüche**

1. Adaptives Entzerrungssystem für digitale Daten am Ausgang eines Amplituden- und Phasenverzerrungen in die Datenübertragung einführenden Kanals (1), wobei das System im Anschluss an den einen Ausgangssignalvektor $X_k$ liefernden Kanal (1) die folgenden Elemente aufweist : ein nichtrekursives Transversalfilter (2) mit N regelbaren Gewichtskoeffizienten, wobei dem Filter ein Entscheidungskreis (3) folgt, um aus dem Filterausgangssignal $y_k$ eine Schützung $\hat{s}_{k-d}$ jedes der dem Eingang des Kanals zugeführten digitalen Daten $s_{k-d}$ zu bilden, wobei das genannte Transversalfilter insbesondere zur Bestimmung dieser N Gewichtskoeffizienten durch sukzessive Iterationen Matrixrechenmittel enthält zum Berechnen eines Vektors vom Typ $C_{k+1} = C_k - f [G^{-1}]$, wobei $C_k$ und $C_{k+1}$ die betreffenden Spaltenvektoren der Gewichtskoeffizienten zu dem Zeitpunkt $t_0 + kT$ bzw. $t_0 + (k + 1) T$ sind und T die Dauer eines Symbols ist, und wobei $f[G^{-1}]$ ein Matrixausdruck ist, in dem $G^{-1}$ eine Annäherung der

0 039 980

inversen Matrix der quadratischen Korrelationsmatrix $A_k$ der Signalvektoren $X_k$ am Ausgang des Kanals zu dem Zeitpunkt $t_0 + kT$ ist, dadurch gekennzeichnet, dass

A) das Transversalfilter (2) ebenfalls Mittel zum Schätzen einer zirkulaten Matrix $R_k$ aufweist, welche die genannte Annäherung der inversen Matrix der Matrix $A_k$ bildet, wobei die genannten Mittel selbst die folgenden Elemente aufweisen :

a) eine Schätzungsanordnung (5) um in der ersten Zeile der Matrix $A_k^e$, welche die Schätzung der quadratischen Korrelationsmatrix $A_k$ der Vektoren $X_k$ zu dem Zeitpunkt $t_0 + kT$ bezeichnet, die $(N/2 + 1)$ ersten Terme $a_i^{(k)}$ zu schätzen wenn N gerade ist oder die $(N + 1)/2$ ersten Terme $a_i^{(k)}$ wenn N ungerade ist, wobei die Schätzung aus der folgenden Beziehung erhalten wird :

$$a_i^{(k)} = \beta a_i^{(k-1)} + x_k^* \cdot x_{k-i}$$

wobei $\beta$ zwischen den Werten 0 und 1 liegt mit Ausnahme der Werte 0 und 1 ;

b) eine Anordnung (6) zum Bilden eines Vektors

$$U^{(k)} = r_0^{(k)}, r_1^{(k)}, r_2^{(k)}, ..., r_{N-2}^{(k)}, r_{N-1}^{(k)}$$

wobei

$$r_i^{(k)} = a_i^{(k)}$$

für jeden Wert von i höchstens gleich N/2 wenn N gerade ist oder höchstens gleich $(N - 1)/2$ wenn N ungerade ist und

$$r_i^{(k)} = a_{N-i}^{(k)}$$

für jeden Wert von i, der diese genannten Grenzen überschreitet ;

B) und dass die Matrixmittel zum Berechnen des Vektors $C_{k+1}$ die folgenden Elemente aufweisen :

c) eine Anordnung (7) zum Bestimmen eines Vektors $\Lambda^{(k)}$ mit N Eigenwerten

$$\lambda_0^{(k)} \text{ bis } \lambda_{N-1}^{(k)}$$

mit Hilfe der Beziehung

$$\Lambda^{(k)} = \sqrt{N} \cdot P \cdot U^{(k)TR}$$

wobei $U^{(k)TR}$ die Transponierte des gemäss (b) gebildeten Vektors $U^{(k)}$ ist und P die unitäre Matrix der Ordnung N, die definiert ist durch :

$$P = \| P_{f,g} \| \quad (f, g = 0, 1, 2, ..., N - 2, N - 1)$$

$$\left( \text{mit } P_{f,g} = \frac{1}{\sqrt{N}} \exp\left[ j \frac{2 \pi fg}{N} \right] \right)$$

d) eine Multiplizieranordnung (8) zum Berechnen des Vektors $Q^{(k)} = \alpha_k e_k P^{cc} X_k$, wobei in diesem Ausdruck $P^{cc}$ die konjugiert-komplexe Matrix der Matrix P bezeichnet ;

e) eine Anordnung (9) zum Teilen des so erhaltenen Vektors $Q^{(k)}$ durch den Vektor $\Lambda^{(k)}$, wobei dieser Teilungsvorgang Term für Term durchgeführt wird, so dass die Terme des Vektors

$$F^{(k)} = ( f_0^{(k)}, f_1^{(k)}, f_2^{(k)}, ..., f_{N-2}^{(k)} f_{N-1}^{(k)} ) = Q^{(k)}/\Lambda^{(k)}$$

für jeden Wert von i gegeben werden durch den Ausdruck

$$f_i^{(k)} = q_i^{(k)}/\lambda_i^{(k)},$$

f) eine Multiplizieranordnung (10) zum Multiplizieren des so erhaltenen Vektors $F^{(k)}$ mit der Matrix P ;

g) eine Anordnung (11) zum Evaluieren des Vektors

$$C_{k+1} = C_k - P \cdot F^{(k)} = C_k - H^{(k)}$$

der zu dem Zeitpunkt $t_0 + (k + 1)T$ den Vektor der N Gewichtskoeffizienten des Transversalfilters (2) darstellt, der durch Bestimmung des Unterschiedes zwischen dem Vektor $C_k$, der auf gleiche Weise während des vorhergehenden Iterationsschrittes zu dem Zeitpunkt $t_0 + kT$ evaluiert wurde, und dem Ausgangsvektor $H^{(k)}$ der Anordnung (10) erhalten wird und der es ermöglicht, diese Gewichtskoeffizienten durch Ersatz von $C_k$ durch $C_{k+1}$ zu aktualisieren.

11

2. System nach Anspruch 1, dadurch gekennzeichnet, dass es ebenfalls die folgenden Elemente aufweist :

h) eine Multiplizieranordnung (12) zum Multiplizieren des Ausgangssignalvektors $X_k$ des Übertragungskanals (1) mit der unitären Matrix P, wodurch ein Ausgangssignal $Z_k$ erzeugt wird, das dem Eingang des Filters (2) zugeführt wird ;

i) eine Multiplizieranordnung (13), eingefügt zwischen der Multiplizieranordnung (10) und der Evaluieranordnung (11), um der Ausgangsvektor $H^{(k)}$ der Anordnung (10) mit der Matrix $P^{cc}$ zu multiplizieren, damit die Anordnung (11) den Vektor $D_{k+1} = P^{cc}C_{k+1}$ evaluieren kann, der zu dem Zeitpunkt $t_0 + (k + 1)T$ den Vektor der N Gewichtskoeffizienten des Transversalfilters (2) darstellt, wenn dieses Filter das Ausgangssignal $Z_k$ der Multiplizeranordnung (12) erhält, der durch Bestimmung des Unterschiedes zwischen dem Vektor $D_k$, der auf geiche Weise während des vorhergehenden Iterationsschrittes zu dem Zeitpunkt $t_0 + kT$ evaluiert wurde, und dem Ausgangsvektor $P^{cc} \cdot H^{(k)}$ der Anordnung (13) erhalten wird und der es ermöglicht, diese Gewichtskoeffizienten durch Ersatz von $D_k$ durch $D_{k+1}$ zu aktualisieren.

0 039 980

FIG.1

$$A = \begin{bmatrix} E(X_k^2) & E(X_k \cdot X_{k-1}) & ------ & E(X_k \cdot X_{k-N+1}) \\ E(X_{k-1} \cdot X_k) & E(X_{k-1}^2) & -------- & E(X_{k-1} \cdot X_{k-N+1}) \\ E(X_{k-2} \cdot X_k) & E(X_{k-2} \cdot X_{k-1}) & -------- & E(X_{k-2} \cdot X_{k-N+1}) \\ & & & \\ E(X_{k-N+3} \cdot X_k) & E(X_{k-N+3} \cdot X_{k-1}) & ------ & E(X_{k-N+3} \cdot X_{k-N+1}) \\ E(X_{k-N+2} \cdot X_k) & E(X_{k-N+2} \cdot X_{k-1}) & ------ & E(X_{k-N+2} \cdot X_{k-N+1}) \\ E(X_{k-N+1} \cdot X_k) & E(X_{k-N+1} \cdot X_{k-1}) & ------ & E(X_{k-N+1}^2) \end{bmatrix}$$

FIG.2a

1

$$A = \begin{bmatrix} a_0 & a_1 & a_2 & ---- & & ----a_{N-2} & a_{N-1} \\ a_1 & a_0 & a_1 & & & & a_{N-2} \\ a_2 & a_1 & a_0 & & & & \vdots \\ & \vdots & & & & & \\ & & & & & & a_2 \\ a_{N-2} & & & & & & a_1 \\ a_{N-1} & a_{N-2} & ---- & & ---- & a_2 & a_1 & a_0 \end{bmatrix}$$

## FIG.2b

$$A = \begin{bmatrix} a_0 & a_1 & a_2 & ---- & a_{l-2} & a_{l-1} & 0 & ---- & & 0 \\ a_1 & a_0 & a_1 & & & a_{l-2} & a_{l-1} & & & \vdots \\ a_2 & a_1 & a_0 & & & & & & & 0 \\ \vdots & & & & & & & & & a_{l-1} \\ & & & & & & & & & a_{l-2} \\ a_{l-2} & & & & & & & & & \\ a_{l-1} & & & & & & & & & \\ 0 & & & & & & & & & \\ \vdots & & & & & & & & a_1 \\ 0 & & & & & & & a_1 & a_0 \end{bmatrix}$$

## FIG.2c

FIG.3a

FIG.3b

FIG.4

FIG.5

FIG.6a

FIG.6b